# EUROPEAN PATENT APPLICATION

(11) **EP 4 601 087 A1**
(43) Date of publication of application: **13.08.2025**
(21) Application number: 23909152.3
(22) Date of filing: 27.07.2023
(51) Int. Cl.: H01M 50/15, H01M 50/166, H01M 50/536, H01M 10/04, H01M 6/00, H01M 50/176

(54) **TOP COVER ASSEMBLY, BATTERY CELL, ASSEMBLING METHOD FOR BATTERY CELL, AND ELECTRICAL DEVICE**

(30) Priority: 30.12.2022 CN 202211738714
(71) Applicant: Xiamen Hithium Energy Storage Technology Co., Ltd., Xiamen, Fujian 361100 (CN)
(72) Inventor: CHEN, Weixin, Xiamen, Fujian 361100 (CN)
(74) Representative: DREISS Patentanwälte PartG mbB
(86) International application number: PCT/CN2023/109659
(87) International publication number: WO 2024/139210

(57) **Abstract**

A top cover assembly (100), a battery cell, an assembling method for a battery cel, and an electric device. The top cover assembly (100) includes: a top cover loading-into-housing assembly (101), comprising an insulation member (110), an adapter (120), a first end cover (130) and a pole (150) connected to the adapter (120), wherein the projection contour of the first end cover (130) falls within an area defined by the outer edge contour of the insulating member (110). A projection contour of the first end cover (130) is located within a region defined by an outer edge contour of the insulation member (110), and the pole (150) sequentially penetrates the insulation member (110) and the first end cover (130).

## Description

### PRIORITY INFORMATION

The present application claims priority to and benefit of Chinese patent application No. 202211738714.3, filed with China National Intellectual Property Administration on December 30, 2022, the entire contents of which are incorporated herein by reference.

### FIELD

The present disclosure relates to the field of battery cell assembly technologies, and more particularly, to a top cover assembly, a battery cell, an assembly method for the battery cell, and an electric device.

### BACKGROUND

A battery cell is a common energy storage device in a new energy technical field currently, such as a two-way battery cell, a single-pass battery cell and the like. Taking the two-way battery cell as an example, the two-way battery cell has openings at two sides of a housing, so as to facilitate loading a cell into the housing. An assembling process of the battery cell typically includes: welding the cell to a tab of a top cover assembly at one side; loading the cell into the housing; welding the cell to a tab of a bottom cover assembly at the other side; and welding the top cover assembly and the bottom cover assembly at the openings of the housing, respectively.

That is, the assembling process of the battery cell is completed based on "welding the tab on one side → loading into the housing → welding the tab on the other side → welding the top cover assembly and the bottom cover assembly respectively to two sides of the housing".

It can be seen that in the related art, the assembling process of the battery cell is complex. Specifically, welding processes of the tabs on the two sides must be separately carried out before and after the process of loading into the housing.

Meanwhile, welding of the tab on one side needs to be carried out after the cell is loaded into the housing, which is interfered with the housing, and the tab needs to have a large length to pull a part of the tab out of the housing. After welded to the top cover assembly, the tab is bent and accommodated in the housing, which results in an excessive length of the tab and increased difficulty of the welding process.

### SUMMARY

Embodiments of the present disclosure discloses a top cover assembly, a battery cell, an assembly method for the battery cell, and an electric device, which can solve problems such as complex assembling process of the battery cell, an excessive length of a tab, low process operability and the like due to the fact that welding processes of the tabs on two sides need to be separately carried out in the related art.

In order to achieve the purpose, in a first aspect, the present disclosure discloses a top cover assembly applied in a battery cell. The battery cell includes a housing and a cell accommodated in the housing. The top cover assembly includes a top cover loading-into-housing assembly accommodatable in an inner cavity of the housing. The top cover loading-into-housing assembly includes: an insulation member provided on a side of the top cover loading-into-housing assembly facing towards the cell; an adapter provided on a side of the insulation member facing towards the cell and configured to be connected to the cell; a first end cover provided on a side of the insulation member facing away from the cell, in which a projection contour of the first end cover on the insulation member is located within a region defined by an outer edge contour of the insulation member; and a pole connected to the adapter and sequentially penetrating the insulation member and the first end cover.

Optionally, the top cover assembly further includes a second end cover provided on the side of the insulation member facing away from the cell. The second end cover has an accommodation hole for accommodating the first end cover, and the second end cover is configured to cover an opening of the housing.

Optionally, a first abutment portion is provided at a side close to the insulation member on a periphery of the first end cover, and a second abutment portion is provided at a side facing away from the insulation member in the accommodation hole. The first abutment portion and the second abutment portion are sequentially stacked in a direction facing away from the insulation member. The first end cover is in position-limiting fit with the second end cover through the first abutment portion and the second abutment portion in a direction perpendicular to the insulation member.

Optionally, an area of a projection of the insulation member on the second end cover is smaller than an area of a region defined by an outer contour of a surface of the second end cover in a loading-into-housing direction, and the loading-into-housing direction is a height direction of the housing. An inner wall surface of the accommodation hole and an outer peripheral surface of the first end cover are attached to each other. An outer peripheral surface of the second end cover is configured to be attached to an inner peripheral surface of the housing to cover the opening, and a gap is formed between the insulation member and the housing in a first direction intersecting with the loading-into-housing direction.

Optionally, an explosion-proof valve is further included. At least one of the first end cover and the second end cover has a through hole. The insulation member has a pressure relief hole in communication with the through hole. The explosion-proof valve covers the through hole.

Optionally, an engagement groove is formed on a side of the insulation member facing towards the cell, and the adapter is at least partially engaged into the engagement groove.

Optionally, a positioning protrusion is provided on the side of the insulation member facing towards the cell. The positioning protrusion is arranged on a circumferential surface of the engagement groove and protrudes towards the adapter. A positioning recess is provided on a periphery of the adapter, and the positioning recess is recessed away from the circumferential surface of the engagement groove. The positioning protrusion is accommodated in the positioning recess, and the adapter is in positioning fit with the insulation member by the positioning recess and the positioning protrusion.

Optionally, a support protrusion is provided on the side of the insulation member facing towards the cell, and the support protrusion is configured to support the cell.

In a second aspect, the present disclosure discloses a battery cell including a housing, a cell, a bottom cover assembly, and a top cover assembly. The housing has an inner cavity, and an opening is formed on each of two opposite sides of the housing and in communication with the inner cavity. The top cover loading-into-housing assembly is accommodated in the inner cavity of the housing. The adapter is connected to one of two opposite sides of the cell, and the second end cover covers the opening on one of the two opposite sides of the housing. The bottom cover assembly is connected to another one of the two opposite sides of the cell and covers the opening on the other side of the housing.

In a third aspect of the present disclosure, an assembling method for a battery cell, applied in assembling and forming a battery cell. The assembling method includes: assembling an insulation member, an adapter, a first end cover, and a pole to form the top cover loading-into-housing assembly; connecting two opposite sides of the cell to the top cover loading-into-housing assembly and the bottom cover assembly respectively, to form a loading-into-housing assembly; loading a side, on which the top cover loading-into-housing assembly is provided, of the loading-into-housing assembly through an opening on a first side of the housing, to position both the cell and the top cover loading-into-housing assembly in the housing, with the top cover loading-into-housing assembly being located at an opening on a second side of the housing and the bottom cover assembly being located at the opening on the first side of the housing, in which the first side is opposite to the second side; connecting the second end cover to the insulation member to form the top cover assembly together with the top cover loading-into-housing assembly, and covering the opening on the second side of the housing by the second end cover; and covering the opening on the first side of the housing by the bottom cover assembly.

In a fourth aspect, the present disclosure provides an electric device including a battery cell.

Beneficial effects of the present disclosure compared with the related art will be described below.

The top cover assembly according to the present disclosure is applied in a battery cell. The battery cell incudes a housing and a cell accommodated in the housing. The top cover assembly includes a top cover loading-into-housing assembly accommodatable in an inner cavity of the housing. The top cover loading-into-housing assembly includes: an insulation member provided on a side of the top cover loading-into-housing assembly facing towards the cell; an adapter provided on a side of the insulation member facing towards the cell and configured to be connected to the cell; a first end cover provided on a side of the insulation member facing away from the cell, in which a projection contour of the first end cover on the insulation member is located within a region defined by an outer edge contour of the insulation member; and a pole connected to the adapter and sequentially penetrating the insulation member and the first end cover. The present disclosure can achieve following technical effects.

On the one hand, for the battery cell, a welding of the tabs on the two sides of the cell before the process of loading into the housing can be completed. Thus, the process is simplified from "welding a tab on one side → loading into the housing → welding a tab on the other side" in the related art to "welding tabs on two sides →loading into the housing" of the present disclosure, and thus an assembling efficiency of the battery cell can be improved.

On the other hand, since the welding process of the tabs on the two sides in the present disclosure is carried out before the process of loading into the housing, interference from the housing can be avoided in the welding process, and operability of the assembling process of the battery cell can be improved.

In addition, as stated above, in the related art, the tab should be reserved with a predetermined length to be pulled out of the housing for welding, while in the present disclosure, welding of the tab will not be interfered by the housing. Therefore, the tab does not need to be reserved with a predetermined length, and the length of the tab is shortened.

Therefore, with the top cover assembly of the present disclosure, the assembly efficiency of the battery cell and the process operability can be improved, and the length of the tab can be lengthened, thereby reducing cost and improving efficiency.

### BRIEF DESCRIPTION OF THE DRAWINGS

In order to clearly explain technical solutions of embodiments of the present disclosure or in the related art, drawings used in description of the embodiments or the related art will be briefly described below. The drawings described below merely illustrate some embodiments of the present disclosure. Based on these drawings, other drawings can be obtained by those skilled in the art without creative effort.
FIG. 1 is an exploded view of a top cover assembly according to the present disclosure;
FIG. 2 is an overall structural view of a top cover assembly according to the present disclosure;
FIG. 3 is a structural view of an interior of a battery cell according to the present disclosure;
FIG. 4 is an enlarged view of part I of FIG. 3 according to the present disclosure;
FIG. 5 is an enlarged view of part II of FIG. 3 according to the present disclosure;
FIG. 6 is a sectional view taken along a line A-A of FIG. 3 according to the present disclosure;
FIG. 7 is a structural view of a rear surface of an insulation member according to the present disclosure;
FIG. 8 is a structural view of an adapter according to the present disclosure;
FIG. 9 is a splitting view of a battery cell according to the present disclosure;
FIG. 10 is schematic view of a battery cell in a first state according to the present disclosure;
FIG. 11 is a schematic view of a battery cell in a second state according to the present disclosure;
FIG. 12 is a schematic view of a battery cell in a third state according to the present disclosure.

Reference Signs of Drawings:
10-loading-into-housing assembly,
100-top cover assembly,
101-top cover loading-into-housing assembly,
110-insulation member,
111-pressure relief hole, 112-engagement groove, 113-positioning protrusion, 114-support protrusion,
120-adapter,
121-base, 122-tab connection portion, 123-positioning recess, 124-via hole,
130-first end cover,
131-first abutment portion, 132-through hole,
150-pole,
160-explosion-proof valve,
140-second end cover,
141-accommodation hole, 142-second abutment portion,
200-cell,
210-cell body, 220-tab,
300- housing,
400-bottom cover assembly.

### DESCRIPTION OF EMBODIMENTS

In order to enable those skilled in the art to understand the technical solutions of the present disclosure, reference will be made clearly and completely technical solutions in the embodiments of the present disclosure with accompanying drawings. Obviously, the embodiments described here are only part of the embodiments of the present disclosure and are not all embodiments of the present disclosure. Based on the embodiments of the present disclosure, other embodiments obtained by those skilled in the art without creative labor are within scope of the present disclosure.

In the present disclosure, terms such as "over", "below", "left", "right", "front", "back", "top", "bottom", "in", "out", "vertical", "horizontal", "transverse", "longitudinal", "circumferential", etc., is based on the orientation or position relationship shown in the drawings, and is only for the convenience of describing the present disclosure and the embodiments of the present disclosure, rather than indicating or implying that the associated device, element, or component must have a specific orientation, or be constructed and operated in a specific orientation.

Moreover, some of the above-mentioned terms may be used to indicate other meanings than the orientation or position relationship, for example, the term "above" may also be used in some cases to indicate some kind of dependency or connection. The specific meanings of these terms in the present disclosure will be understood by those skilled in the art as appropriate.

In addition, terms "installed" "mounted," "connected," and "coupled" are understood broadly, such as fixed, detachable mountings, connections and couplings or integrated, and can be mechanical or electrical mountings, connections and couplings, and also can be direct and via media indirect mountings, connections, and couplings, and further can be inner mountings, connections and couplings of two components or interaction relations between two components, which can be understood by those skilled in the art according to the detail embodiment of the present disclosure.

In addition, terms such as "first" and "second", etc., may be used primarily herein to distinguish between different devices, elements or components (specific types and configurations may be the same or not) and are not used to indicate or imply relative importance and the number of the indicated devices, elements or components. Unless otherwise indicated, "plurality of" means two or more.

In the related art, an assembling process of a battery cell is complex and tedious, and taking a two-way battery cell with openings at two sides of a housing as an example, the assembling process of the battery cell typically includes: welding the cell to a tab of a top cover assembly at one side; loading the cell into the housing; welding the cell to a tab of a bottom cover assembly at the other side; and welding the top cover assembly and the bottom cover assembly at the openings of the housing, respectively.

That is, the assembling process of the battery cell is completed based on "welding the tab on one side →loading into the housing → welding the tab on the other side → welding the top cover assembly and the bottom cover assembly respectively to two sides of the housing".

It can be seen that, for the assembling of the battery cell, the welding processes of the tabs on the two sides must be separately carried out and are respectively carried out before and after the process of loading into the housing. Meanwhile, welding of the tab on one side needs to be carried out after the cell is housed into the housing, which is interfered with the housing. The tab needs to have a large length to pull a part of the tab out of the housing. After welded to the top cover assembly, the tab is bent and accommodated in the housing, which results in an excessive length of the tab and increased difficulty of the welding process.

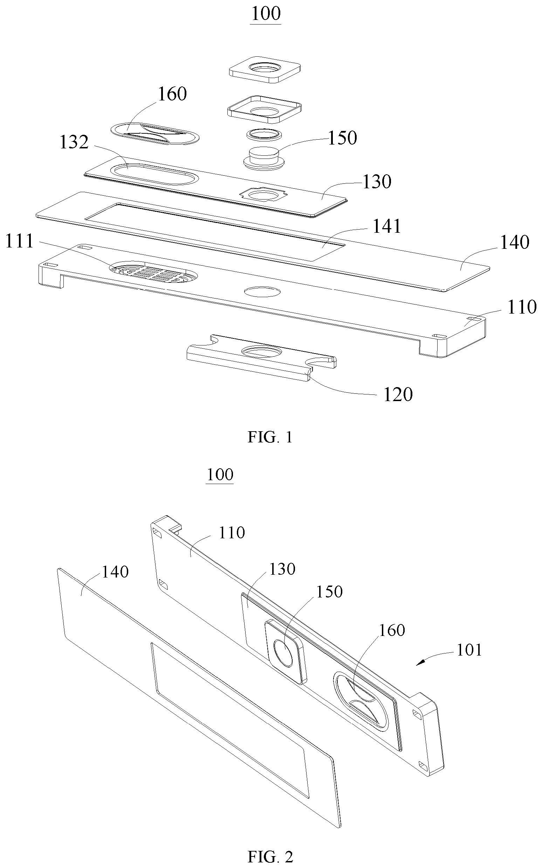

An object of the present disclosure is to solve the related problem. The present disclosure will be described below with reference to FIG. 1 to FIG. 12.

Referring to FIG. 1 and FIG. 2, the present disclosure discloses a top cover assembly 100 applied in a battery cell. The battery cell includes a housing 300 and a cell 200 accommodated in the housing 300. Specifically, the top cover assembly 100 is configured to cover an opening of the housing 300 of the battery cell, and is connected to the cell 200 for electrical conduction.

The top cover assembly 100 may include a top cover loading-into-housing assembly 101. The top cover loading-into-housing assembly 101 is accommodatable in an inner cavity of the housing 300 of the battery cell. Further, the top cover loading-into-housing assembly 101 includes an insulation member 110, an adapter 120, a first end cover 130, and a pole 150. A cross-sectional area of the top cover loading-into-housing assembly 101 in a loading-into-housing direction may be smaller than or equal to a cross-sectional area of an inner cavity of the housing 300 in the loading-into-housing direction. The loading-into-housing direction is a height direction of the housing 300. This indicates that the top cover loading-into-housing assembly 101 can be freely movable in and out of the housing 300. Such characteristic is very important in later assembling steps of the battery cell, and a specific assembling method will be detailed later.

The insulation member 110 can provide insulation to prevent the battery cell from having abnormalities such as current leakage and the like. The insulation member 110 may be provided on a side of the top cover assembly 100 facing towards the cell 200 of the battery cell. The adapter 120 is a conductive element of the top cover assembly 100, and may be arranged on a side of the insulation member 110 facing towards the cell 200, and configured to be connected to the cell 200.

The first end cover 130 may be provided on a side of the insulation member 110 facing away from the cell 200, for example, adhered to the insulation member 110. A projection contour of the first end cover 130 on the insulation member 110 is located in a region defined by an outer edge contour of the insulation member 110.

The pole 150 may be connected to the adapter 120, and the pole 150 penetrates the insulation member 110 and the first end cover 130 sequentially, so that the cell 200, the adapter 120, and the pole 150 form a conductive circuit, to complete electric energy transmission.

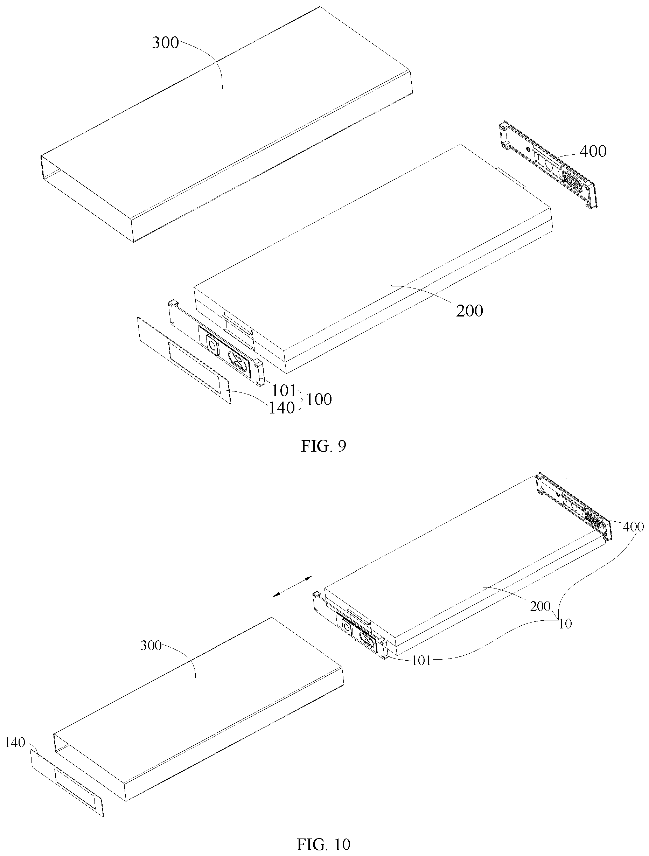

Since the top cover loading-into-housing assembly 101 can freely move into and out of the housing 300, in the specific assembling steps of the battery cell, the insulation member 110, the adapter 120, the first end cover 130, the pole 150 and the like may be firstly assembled together outside the housing 300 to form the top cover loading-into-housing assembly 101 as shown in FIGS. 2 and 10. Then, the top cover loading-into-housing assembly 101, a bottom cover assembly 400 described later, and tabs 220 on two sides of the cell 200 are welded to form the loading-into-housing assembly 10 as shown in FIG. 10. Thereafter, the loading-into-housing assembly 10 is mounted into the housing 300, to complete the assembling of the battery cell.

It can be seen that due to separated structures of the first end cover 130 and the second end cover 140 in the top cover assembly 100, and the free movement of the top cover loading-into-housing assembly 101 into or out of the inner cavity of the housing 300 of the battery cell, the present disclosure can achieve following technical effects.

On the one hand, for the battery cell, a welding of the tabs 220 on the two sides of the cell 200 before the process of loading into the housing can be completed. Thus, the process is simplified from "welding a tab on one side →loading into the housing → welding a tab on the other side" in the related art to "welding tabs on two sides →loading into the housing" of the present disclosure, and thus an assembling efficiency of the battery cell can be improved.

On the other hand, since the welding process of the tabs 200 on the two sides in the present disclosure is carried out before the step of loading into the housing, interference from the housing 300 can be avoided in the welding process, and operability of the assembling process of the battery cell can be improved.

In addition, as stated above, in the related art, the tab should be reserved with a predetermined length to be pulled out of the housing for welding, while in the present disclosure, welding of the tab will not be interfered by the housing 300. Therefore, the tab does not need to be reserved with a predetermined length, and the length of the tab is reduced.

Therefore, with the top cover assembly 100 of the present disclosure, the assembly efficiency of the battery cell and the process operability can be improved, and the length of the tab can be lengthened, thereby reducing cost and improving efficiency.

Optionally, since the top cover loading-into-housing assembly 101 can freely move into and out of the housing 300, after the battery is assembled and formed, a gap is inevitably formed between the top cover loading-into-housing assembly 101 and the housing 300, which may affect sealing performance of the battery cell and the like. In order to solve this problem, a following solution will be adopted.

The top cover assembly 100 may further include a second end cover 140. The second end cover 140 is provided on a side of the insulation member 110 facing away from the cell 200. The end cover 140 has an accommodation hole 141 for accommodating the first end cover 130. The second end cover 140 may be adhered to the insulation member 110 by means of adhesive and the like, and may also be connected to the insulation member 110 through snapping, riveting, etc. The second end cover 140 is configured to cover the opening of the housing 300 to seal the opening of the housing 300, such as to be welded or adhered to each other and the like.

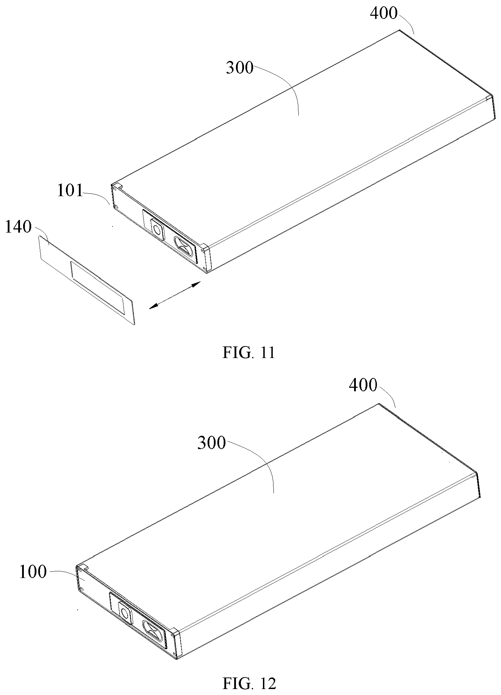

The assembling process may be disclosed as shown in FIGS. 11 and 12. That is, after the loading-into-housing assembly 10 is mounted into the housing 300, the second end cover 140 is connected to the top cover loading-into-housing assembly 101 to form the top cover assembly 100, and then the second end cover 140 and the bottom cover assembly 400 respectively cover the openings on two sides of the housing 300.

It can be seen that with such a separated end cover structure of the top cover assembly 100 (i.e., a mating structure of the second end cover 140 and the first end cover 130) of the present disclosure, the sealing performance of the top cover assembly 100 on the battery cells can be improved by covering the openings of the housing 300 with the second end cover 140 while simplifying the assembling process of the battery into welding the tabs 220 into welding the tabs on the two sides outside the housing and then performing the loading-into-housing.

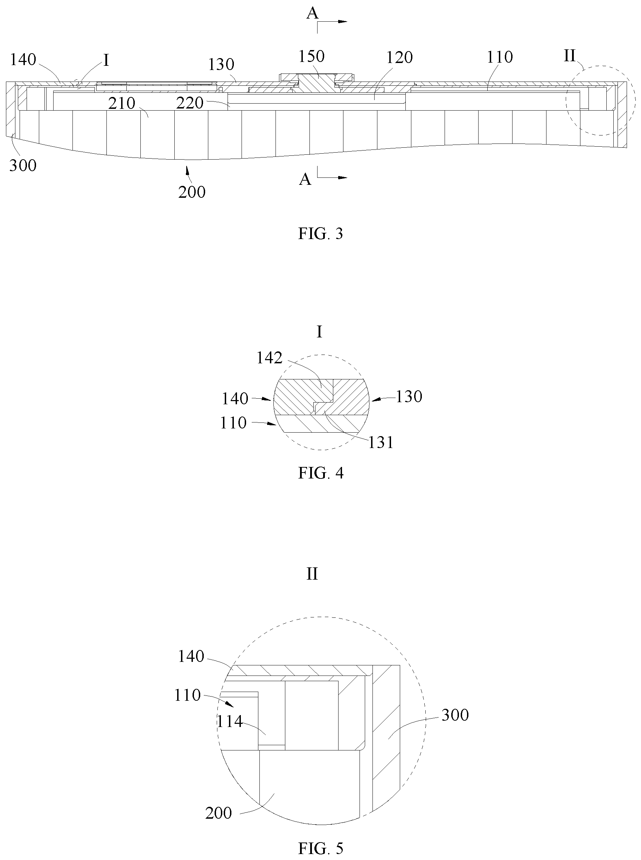

Optionally, as shown in FIGS. 3 and 4, a first abutment portion 131 is provided at a side close to the insulation member 110 on a periphery of the first end cover 130, and a second abutment portion 142 is provided at a side facing away from the insulation member 110 in the accommodation hole 142. The first abutment portion 131 and the second abutment portion 142 are sequentially stacked in a direction facing away from the insulation member 110. The first end cover 130 is in position-limiting fit with the second end cover 140 through the first abutment portion 131 and the second abutment portion 142 in a direction perpendicular to the insulation member 110.

It can be seen that a mutual buckling design of the first end cover 130 and the second end cover 140 can provide press-fitting to the first end cover 130 to prevent the first end cover 130 from being separated from the top cover assembly 100. As a result, connection effect is more stable. Meanwhile, a contact area between the first end cover 130 and the second end cover 140 can be also increased, so that the welding or adhering between the first end cover 130 and the second end cover 140 is more stable. In addition, this buckling design can improve the sealing effect, and thus it is possible to prevent dust, water stains, or the like from flowing into the insulation member 110 along the gap between the first end cover 130 and the second end cover 140.

Optionally, a chamfer structure is provided on a side of the second abutment portion 142 facing towards the first abutment portion 131, and a chamfer structure is provided on a side of the first abutment portion 131 facing towards the insulation member 110. In addition, a chamfer structure is provided on a side of the accommodation hole 141 close to the insulation member 110. In this way, mounting efficiency between the first end cover 130 and the second end cover 140 can be improved.

Optionally, as shown in FIG. 3 to FIG.5, an area of a projection of the insulation member 110 on the second end cover 140 is smaller than an area of a region defined by an outer contour of a surface of the second end cover 140 in a loading-into-housing direction. The loading-into-housing direction is a height direction of the housing 300. That is, the loading-into-housing direction is a direction in which the top cover loading-into-housing assembly 101 is loading into the housing 300. In other words, in the loading-into-housing direction, a contour of the second end cover 140 is greater than a contour of the insulation member 110, so that an integral structure formed by the second end cover 140 and the insulation member 110 is formed as a stepped structure on the appearance. Further, the second end cover 140 is formed as a large end of the stepped structure, and the insulation member 110 is formed as a small end of the stepped structure.

An inner wall surface of the accommodation hole 141 is attached to an outer peripheral surface of the first end cover 130, such that a relative position between the second end cover 140 and the first end cover 130 is fixed. A relative position between the first end cover 130 and the insulation member 110 is also kept fixed. As a result, a relative position between the second end cover 140 and the insulation member 110 can be fixed. That is, the positioning fit between the second end cover 140 and the insulation member 110 can be realized through the accommodation hole 141 and the first end cover 130. Meanwhile, the outer peripheral surface of the second end cover 140 is configured to be attached to an inner peripheral surface of the housing 300 to cover the opening.

In this way, a relative position relationship among the housing 300, the second end cover 140 and the insulation member 110 can be quickly determined through the attachment between the second end cover 140 and the housing 300 and the attachment between the second end cover 140 and the first end cover 130, thereby ensuring that a gap is formed between the insulation member 110 and the housing 300 in the first direction after the top cover loading-into-housing assembly 101 is loaded into the housing, in which the first direction intersects the loading-into-housing direction. In the present disclosure, the first direction is preferably perpendicular to the loading-into-housing direction. For example, the first direction is a radial direction of the housing 300. In this way, mutual collision between the insulation member 110 and the housing 300 can be avoided, and the assembling efficiency of the battery cell can be also improved.

Optionally, as shown in FIGS. 1 and 2, the top cover assembly 100 may further include an explosion-proof valve 160. At least one of the first end cover 130 and the second end cover 140 has a through hole 132, and the insulation member 110 has a pressure relief hole 111 in communication with the through hole 132. The explosion-proof valve 160 covers the through hole 132.

In the present disclosure, the through hole 132 is formed on the first end cover 130, so that the explosion-proof valve 160 is a component on the top cover loading-into-housing assembly 101. Therefore, the explosion-proof valve 160 with such a design can improve design flexibility to prevent the strength of the housing 300 from being reduced due to forming an explosion-proof hole on the housing 300.

The through hole 132 may also be arranged on the second end cover 140, so that the explosion-proof valve 160 needs to be assembled on the top cover loading-into-housing assembly 101 together with the second end cover 140 after the top cover loading-into-housing assembly 101 is loaded into the housing. Each of the second end cover 140 and the first end cover 130 may have the through hole 132, so that the top cover assembly 100 is provided with a plurality of the explosion-proof valves 160. Therefore, an exhaust pressure relief capability can be improved, and the detailed description thereof will be omitted herein.

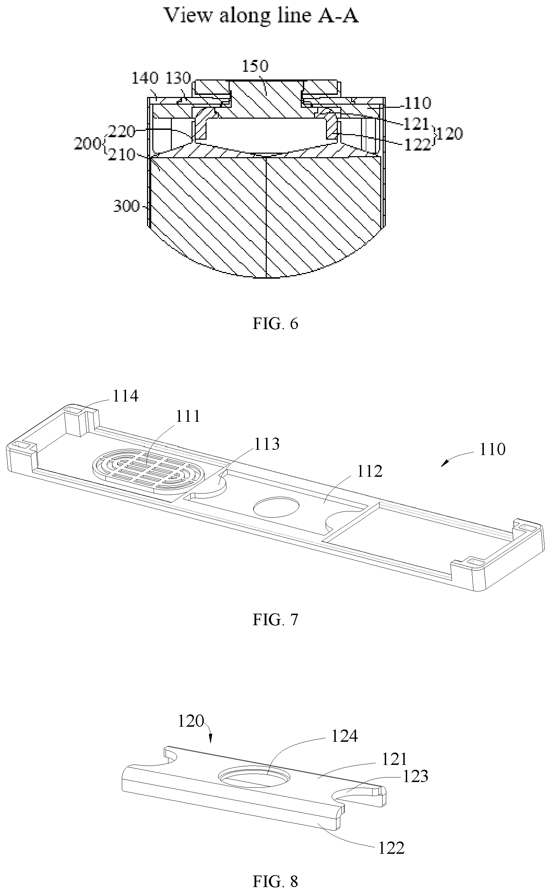

Optionally, as shown in FIGS. 3 and 6, the cell 200 includes a cell body 210 and a tab 220 that are connected to each other. The tab 220 is provided on a side of the cell body 210 facing towards the adapter 120. For example, the tab 220 is a connection sheet with a rectangular cross section.

The adapter 120 includes a base 121 and a tab connection portion 122. The base 121 is arranged on the insulation member 110, and the tab connection portion 122 is arranged on a side of the base 121 facing towards the cell body 210. The tab connection portion 122 extends towards the cell body 210 to be connected the tab 220. For example, the tab connection portion 122 is a connection plate having a rectangular cross section. An extending direction of the tab 220 and an extending direction of the tab connection portion 122 are both parallel to the loading-into-housing direction.

It can be seen that in this design, the tab 220 does not need to be pulled out of the housing for welding. As a result, there is no need to for the tab 220 to have a predetermined length through bending, winding and the like, and the tab connection portion 122 and the tab 220 directly extend relative to each other to be attached to each other, to achieve electrical connection therebetween. Therefore, the length of the tab 220 can be more effectively reduced.

Optionally, an attaching surface of the tab 220 with the tab connection portion 122, and an attaching surface of the tab connection portion 122 with the tab 220 may be parallel to the loading-into-housing direction. That is, the tab 220 and the tab connection portion 122 are attached to each other with the side surfaces. As a result, a contact area between the tab 220 and the tab connection portion 122 can be increased.

Optionally, two tab connection portions 122 may be provided, and the two tab connection portions 122 are opposite to each other and arranged on two opposite sides of the base 121. As a result, two cells 200 may be arranged in the battery cell and are connected to the tab connection portion 122. Therefore, a capacitance of the battery cell can be improved.

Optionally, as shown in FIGS. 6 to 8, the side of the insulation member 110 facing towards the cell 200 may be provided with an engagement groove 112, and at least a part of the adapter 120 is engaged into the engagement groove 112. In this way, a position of the adapter 120 can be restricted to prevent the adapter 120 from occurring abnormalities such as shaking, rotation etc. Also, the insulation member 110 and the adapter 120 can also multiplex the height, thereby facilitating overall thinning of the top cover assembly 100.

Optionally, the adapter 120 has a via hole 124, and at least a part of the pole 150 is accommodated in the via hole 124 to be connected to the adapter 120. In this way, the adapter 120 can be positioned by the pole 150, to improve a positioning effect on the adapter 120. Meanwhile, the adapter 120 and the pole 150 can also multiplex the height, thereby facilitating the overall thinning of the top cover assembly 100.

Optionally, a side of the insulation member 110 facing towards the cell 200 is provided with a positioning protrusion 113. The positioning protrusion 113 is arranged on a circumferential surface of the engagement groove 112 and protrudes towards the adapter 120. A positioning recess 123 is provided on a periphery of the adapter 120, and the positioning recess 123 is recessed away from the circumferential surface of the engagement groove 112. The positioning protrusion 113 is accommodated in the positioning recess 123. The adapter 120 is in positioning fit with the insulation member 110 by the positioning recess 123 and the positioning protrusion 113. In this way, the positioning effect on the adapter 120 can be further improved.

Optionally, a support protrusion 114 is provided on the side of the insulation member 110 facing towards the cell 200. The support protrusion 114 is configured to support the cell 200 to avoid a connection failure between the tab 220 and the adapter 120 caused by the pulling to the tab 220 due to the shaking of the cell 200 during use of the battery cell.

The present disclosure also provides a battery cell. As shown in FIGS. 3 to 6 and 11, the battery cell may include a housing 300, a cell 200, a bottom cover assembly 400, and a top cover assembly 100. The housing 300 has an inner cavity, and an opening is formed on each of two opposite sides of the housing 300, and is in communication with the inner cavity. The top cover loading-into-housing assembly 101 is accommodated in the inner cavity of the housing 300. The adapter 120 is connected to one of sides of the cell 200. The second end cover 140 is connected to the top cover loading-into-housing assembly 101 and covers the opening on one of the two sides of the housing 300. The bottom cover assembly 400 is connected to the other side of the cell 200 and covers the opening on the other side of the housing 300. As stated above, the battery cell of the present disclosure has high assembly efficiency and process operability, and the length of the tab can be reduced. Therefore, cost can be lowered, and the efficiency can be enhanced.

The present disclosure further discloses an assembling method for a battery cell, applied in assembling and forming the battery cell described above. The assembling method includes: assembling the insulation member 110, the adapter 120, the first end cover 130, the pole 150, and the explosion-proof valve 160 to form the top cover loading-into-housing assembly 101, as shown in FIG. 2 and FIG. 9; connecting two opposite sides of the cell 200 to the top cover loading-into-housing assembly 101 and the bottom cover assembly 400 respectively, to form the loading-into-housing assembly 10, as shown in FIG. 10; loading a side, on which the top cover loading-into-housing assembly 101 is provided, of the loading-into-housing assembly 10 through an opening on a first side of the housing 300, to position both the cell 200 and the top cover loading-into-housing assembly 101 in the housing 300, with the top cover loading-into-housing assembly 101 being located at an opening on a second side of the housing 300 and the bottom cover assembly 400 being located at the opening on the first side of the housing 300, in which the first side is opposite to the second side, as shown in FIG. 10 and FIG. 11; connecting the second end cover 140 to the insulation member 110 to form the top cover assembly 100 together with the top cover loading-into-housing assembly 101, and covering the opening on the second side of the housing 300 by the second end cover 140, as shown in FIG. 11 and FIG. 12; and covering the opening on the first side of the housing 300 by the bottom cover assembly 400, as shown in FIG. 11 and FIG. 12.

As stated above, for the battery cell, a welding of the tabs 220 on the two sides of the cell 200 before the process of loading into the housing can be completed. Thus, in the present disclosure, the process is simplified from "welding a tab on one side →loading into the housing → welding a tab on the other side → welding the top cover assembly and the bottom cover assembly to two sides of the housing, respectively" in the related art to "welding tabs on two sides →loading into the housing→ welding the second end cover 140 and the bottom cover assembly 400 to two sides of the housing, respectively". Therefore, an assembling efficiency can be improved. Meanwhile, the process operability can be improved, and the length of the tab can be shortened. Therefore, cost can be lowered, and efficiency can be enhanced.

The present disclosure further discloses an electric device including the battery cell as described above. The battery cell is configured to supply power to the electric device. The electric device is for example an energy storage device, an electric vehicle, a notebook computer and the like, and details thereof will be omitted herein.

Finally, it should be noted that the above embodiments are merely used to illustrate the technical solutions of the present disclosure, rather than limiting the technical solutions. Although the present disclosure has been described in detail with reference to the above embodiments, those of ordinary skill in the art should understand that modifications to the technical solutions described in the above embodiments can be made, or equivalent replacements for some or all of the technical features can be carried out. Moreover, these modifications or replacements do not make the essence of the corresponding technical solutions deviate from the scope of the technical solutions of the embodiments of the present disclosure.

## Claims

1. A top cover assembly (100), applied in a battery cell, the battery cell comprising a housing (300) and a cell (200) accommodated in the housing (300), the top cover assembly (100) comprising:
a top cover loading-into-housing assembly (101) accommodatable in an inner cavity of the housing (300), the top cover loading-into-housing assembly (101) comprising:
an insulation member (110) provided on a side of the top cover loading-into-housing assembly (101) facing towards the cell (200);
an adapter (120) provided on a side of the insulation member (110) facing towards the cell (200) and configured to be connected to the cell (200);
a first end cover (130) provided on a side of the insulation member (110) facing away from the cell (200), a projection contour of the first end cover (130) on the insulation member (110) being located within a region defined by an outer edge contour of the insulation member (110); and
a pole (150) connected to the adapter (120) and sequentially penetrating the insulation member (110) and the first end cover (130).

2. The top cover assembly (100) according to claim 1, wherein the top cover assembly (100) further comprises a second end cover (140) provided on the side of the insulation member (110) facing away from the cell (200), the second end cover (140) having an accommodation hole (141) for accommodating the first end cover (130), and the second end cover (140) being configured to cover an opening of the housing (300).

3. The top cover assembly (100) according to claim 2, wherein:
a first abutment portion (131) is provided at a side close to the insulation member (110) on a periphery of the first end cover (130), and a second abutment portion (142) is provided at a side facing away from the insulation member (110) in the accommodation hole (141), the first abutment portion (131) and the second abutment portion (142) being sequentially stacked in a direction facing away from the insulation member (110); and
the first end cover (130) is in position-limiting fit with the second end cover (140) through the first abutment portion (131) and the second abutment portion (142) in a direction perpendicular to the insulation member (110).

4. The top cover assembly (100) according to claim 2, wherein:
an area of a projection of the insulation member (110) on the second end cover (140) is smaller than an area of a region defined by an outer contour of a surface of the second end cover (140) in a loading-into-housing direction, the loading-into-housing direction being a height direction of the housing (300);
an inner wall surface of the accommodation hole (141) and an outer peripheral surface of the first end cover (130) are attached to each other; and
an outer peripheral surface of the second end cover (140) is configured to be attached to an inner peripheral surface of the housing (300) to cover the opening, and a gap is formed between the insulation member (110) and the housing (300) in a first direction, the first direction intersecting with the loading-into-housing direction.

5. The top cover assembly (100) according to claim 3, further comprising an explosion-proof valve (160), wherein:
at least one of the first end cover (130) and the second end cover (140) has a through hole (132);
the insulation member (110) has a pressure relief hole (111) in communication with the through hole (132); and
the explosion-proof valve (160) covers the through hole (132).

6. The top cover assembly (100) according to claim 4, wherein an engagement groove (112) is formed on a side of the insulation member (110) facing towards the cell (200), the adapter (120) being at least partially engaged into the engagement groove (112).

7. The top cover assembly (100) according to claim 6, wherein a positioning protrusion (113) is provided on the side of the insulation member (110) facing towards the cell (200), the positioning protrusion (113) being arranged on a circumferential surface of the engagement groove (112) and protrudes towards the adapter (120);
a positioning recess (123) is provided on a periphery of the adapter (120), the positioning recess (123) being recessed away from the circumferential surface of the engagement groove (112);
the positioning protrusion (113) is accommodated in the positioning recess (123), and the adapter (120) is in positioning fit with the insulation member (110) by the positioning recess (123) and the positioning protrusion (113).

8. The top cover assembly (100) according to any one of claims 2 to 7, wherein a supporting protrusion (114) is provided on the side of the insulation member (110) facing towards the cell (200), the supporting protrusion (114) being configured to support the cell (200).

9. A battery cell, comprising a housing (300), a cell (200), a bottom cover assembly (400), and the top cover assembly (100) according to any one of claims 2 to 8, wherein:
the housing (300) has an inner cavity, an opening being formed on each of two opposite sides of the housing (300) and in communication with the inner cavity;
the top cover loading-into-housing assembly (101) is accommodated in the inner cavity of the housing (300);
the adapter (120) is connected to one of two opposite sides of the cell (200), and the second end cover (140) covers the opening on one of the two opposite sides of the housing (300); and
the bottom cover assembly (400) is connected to another one of the two opposite sides of the cell (200) and covers the opening on the other side of the housing (300).

10. An assembling method for a battery cell, applied in assembling and forming the battery cell according to claim 9, the assembling method comprising:
assembling the insulation member (110), the adapter (120), the first end cover (130), and the pole (150) to form the top cover loading-into-housing assembly (101);
connecting two opposite sides of the cell (200) to the top cover loading-into-housing assembly (101) and the bottom cover assembly (400) respectively, to form the loading-into-housing assembly (10);
loading a side, on which the top cover loading-into-housing assembly (101) is provided, of the loading-into-housing assembly (10) through an opening on a first side of the housing (300), to position both the cell (200) and the top cover loading-into-housing assembly (101) in the housing (300), with the top cover loading-into-housing assembly (101) being located at an opening on a second side of the housing (300) and the bottom cover assembly (400) being located at the opening on the first side of the housing (300), the first side being opposite to the second side;
connecting the second end cover (140) to the insulation member (110) to form the top cover assembly (100) together with the top cover loading-into-housing assembly (101), and covering the opening on the second side of the housing (300) by the second end cover (140); and
covering the opening on the first side of the housing (300) by the bottom cover assembly (400).

11. An electric device, comprising the battery cell according to claim 9.
